# EUROPEAN PATENT APPLICATION

(11) **EP 4 468 198 A1**
(43) Date of publication of application: **27.11.2024**
(21) Application number: 23175469.8
(22) Date of filing: 25.05.2023
(51) Int. Cl.: G06K 19/02, G06K 19/077, H01Q 1/00, H01L 23/00

(54) **UNIVERSALLY APPLICABLE NEAR-FIELD COMMUNICATION (NFC) TAG FEATURING IN-SITU ASSEMBLY**

(71) Applicant: nanoXtrace GmbH, 6300 Zug (CH)
(72) Inventor: GROSSENBACHER, Roger Marc, 8032 Zürich (CH); LAUPER, Richard Sebastian, 8048 Zürich (CH)
(74) Representative: EGLI-EUROPEAN PATENT ATTORNEYS

(57) **Abstract**

An NFC tag capable of in-situ assembly on a wide variety of materials and objects, fitting on almost any footprint. The NFC tag is nearly invisible and can be applied at any point of an object's lifetime thanks to the technology of self-assembling microbots (9) suspended within a viscous solution (5).

The fluid (5) containing all necessary parts of the NFC tag is applied to the desired object (17) with an applicator (15) and instructed to self-assemble by the use of an external programming unit (19, 21, 23). The fluid (5) is then dried using an arbitrary method to provide a permanent and robust tag.

Finally the newly formed NFC tag can be programmed using conventional methods as outlined within current standards and norms.

## Description

### Technical Field

The invention relates to the field of wireless near-field communication (NFC), in particular passive tags consisting of a chip and an antenna which may be read by a listener device (also termed reading device or reader) like a mobile device, a card reader or a similar device.

### Background Art

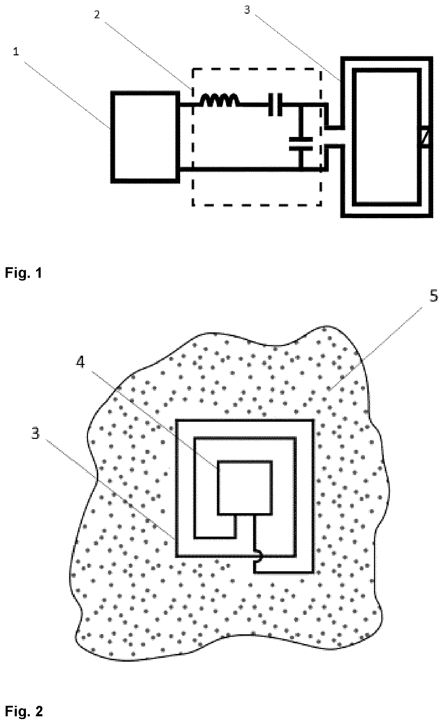

NFC is a widely adopted and employed technology nowadays, with various uses such as information sharing, mobile identification, contactless payments and more. As schematically illustrated in Fig. 1, a passive NFC tag consists of a semiconductor integrated circuit (IC) chip 1 (also called NFC chip), which contains the stored information, and an antenna 3 for coupling with a listener device that is not shown. It is possible to optionally have a matching circuit 2 between the IC chip 1 and the antenna 3. A coupling between the listener device and the NFC tag is made using electromagnetic coupling at usually very close range of a few centimeters. The listener device may emit electromagnetic radiation at e.g. 13.56 MHZ, which provides both signals and power to the passive tag, whereby an exchange of information stored on the NFC chip is made possible. A passive NFC tag does not require its own power source, enabling a very wide field of applications. For a successful wide adoption, global NFC standards are defined such as ISO/IEC 18092, IEC/ISO 15693, ISO/IEC 14443 and Sony FeliCa. The NFC Forum is a community effort by global technology leaders, research institutes and start-ups to promote innovation and harmonize technologies across different suppliers and researchers.

NFC tags may be embedded into different products for mobile identification, access control and payment, such as:
a) Identification cards, badges, credit cards and many types of proof-of-purchase in credit card format (smart cards)
b) Keys, key fobs, keyrings
c) Wearable electronics, integrated into many different pieces of clothing
d) Implantable encapsulation

Additionally, NFC technology has been used to store consumer information, as well as anti-counterfeiting measures or tokens of authenticity, wherefore NFC tags may be embedded into products such as:
a) Goods of luxury brands: clothing, fashion accessories, footwear, and sports accessories
b) Rare collectible items: trading cards, sports accessories utilized at high profile events, sports accessories branded with or endorsed by high profile participants, antique collectibles, and antique furniture
c) Products displaying extraordinary craftsmanship or skill in their production, or the use of rare or expensive raw materials: jewellery, weapons, kitchen utensils, expensive culinary products such as spirits, wine, caviar, saffron, truffle, tuna etc., artwork such as paintings, carvings, sculptures, etc., furniture and watches
d) Culinary products originating from a specified protected region: champagne, various types of cheese, wine, various breeds of beef, chocolate, spices, fruits, and vegetables
e) Spare parts for automotive or enthusiast applications sourced by original equipment manufacturer (OEM)

Other uses for NFC technology include but are not limited to the internet of things (IoT), interactive matter, medical applications, logistics management.

Embedding an NFC tag within a product requires efforts in the supply chain and production management. Accordingly, as an alternative, there exist tags which can be applied by means of adhesive tape. However, sometimes the tape lacks sufficient stability against detachment and/or damage to the NFC chip. Moreover, the process of applying the tag by means of adhesive tape is sometimes fault-prone.

### Disclosure of the Invention

In view of the above-described disadvantages related to known approaches for providing objects with an NFC tag, it is an object of the present invention to provide an NFC tag and a corresponding method of providing an object with such an NFC tag, resulting in a more durable tag that in addition is easier to apply.

The object is achieved by a tagging fluid according to claim 1, a method of providing an object to be tagged with an NFC tag according to claim 8 and an NFC tag according to claim 13. Further developments of the invention are claimed in the dependent claims. In particular, a method according to the invention can be developed further also by features of devices or products according to the invention characterized further below and in the dependent claims, respectively, and vice-versa. Moreover, the features described in connection with one device or product may also be used for a further development of another device or product according to the invention, even if this is not explicitly stated.

An inventive tagging fluid to be applied to an object for tagging the same consists of:
- an NFC chip, being programmable to carry a piece of information, being able to store said piece of information and being able to relay said piece of information when receiving an electromagnetic signal,
- a plurality of microbots, being able to self-assemble either fully independently or with external power and/or one or more signals provided, into a functional NFC antenna, using a coupling mechanism, able to link the microbots as well as the NFC chip to one another, and
- a coating fluid, in which the NFC chip and the plurality of microbots are suspended, which is able to harden after having been applied to the object to be tagged and which has a viscosity allowing the NFC chip and the microbots to move freely during self-assembly.

The electromagnetic signal can be any signal that is sent by an appropriate listening device to the NFC chip in accordance with one or more of the applicable NFC norms or standards. The NFC chip is any IC chip that is able to function in accordance with one or more of the applicable NFC norms or standards and in particular to relay the piece of information in accordance with the respective NFC norm or standard. Accordingly, the NFC chip may be any IC chip that is able to communicate at a frequency covered by the applicable NFC norms or standards, such norms or standards specifying frequencies lying in the range between approx. 120 kHz and 24.125 GHz.

A microbot is understood to be a miniature robot with a maximum dimension that is smaller than 1 mm and a minimum dimension that is larger than 1 µm. Microrobotics is a relatively new and emerging field of miniaturized machines or robots, ranging in the size of 1 µm and less than 1 mm (one millionth and one thousandth of a meter, respectively), here referred to as microbots. These machines are able to assemble into more complex structures for functionality. In other fields, the robots can be capable of self-powered locomotion, carry out mechanical tasks, deliver fluids or substances to a target, carry small amounts of information or programming, or be used within electrical circuits. Currently most prior art focuses on medical applications of microbots.

The coupling mechanism is preferably able to permanently and reliable link the microbots themselves as well as the NFC chip to one another. This means the coupling connections are meant to be permanent after they have been made, meaning resistant to a de-coupling. In order to form a functional antenna, it is in addition necessary to have electrically conductive connections between the microbots themselves as well as between microbots and the NFC chip, which connections are provided by the coupling mechanism. In the self-assembly process, the microbots move to the correct positions to form an antenna, meaning they assume specific coordinates and/or orientations with respect to one another but as well to the NFC chip.

Signals may be guidance signals for a coupling of the microbots to one another and to the NFC chip in appropriate positions and orientations for forming the antenna. In particular, the one or more signals can deliver instructions for self-assembly to the microbots and to the NFC chip.

It should be mentioned that the term "self-assembly" is not limited to processes in which the formation of an antenna occurs completely independently without any information or power input to the tagging fluid, in particular the microbots and the NFC chip. Rather, the term also includes processes where the assembly process is initiated or assisted by one or more signals that are able to provide some guidance. It is preferred that any self-assembly starts only after the tagging fluid has been applied on an object, meaning that the microbots and the NFC chip are still separated from each other when the tagging fluid is applied.

The coating fluid may in particular be a liquid or paste having a viscosity that allows for a movement of the microbots and the NFC chip during self-assembly. Preferably, the viscosity allows for a movement of the microbots and of the NFC chip also in a state, in which the tagging fluid has not yet been applied on an object to be tagged.

Due to the invention, it becomes possible to apply a tag even at positions of an object surface, at which the surface is not flat at all. For example, it becomes possible to apply a tag on a bumpy surface region or even in a in a groove without difficulties.

In case this is desired, it is even possible to adapt the color of the coating to the color of the object surface where the tag is applied. Thereby, visibility of the tag can be considerably reduced, making it nearly invisible at best.

Moreover, the disclosed invention is convenient for applying an NFC tag to a given product or other item at the point of sale or afterwards, i.e. at appraisal, restoration, repair, in deployment or otherwise in situ, whereby the inventive approach leads to a higher durability and a lower visibility as compared to a tag that has been applied by means of adhesive tape. Accordingly, the advantages of embedding the NFC tag within the design of the object are provided, however, at a higher convenience and a lower cost.

The inventive tagging fluid allows for the application of an NFC tag to an extremely wide variety of objects at any moment in their lifetime in a non-invasive, nearly invisible, and very durable way. A resulting NFC tag will be flexible in size and form and thus can have an arbitrary footprint and may even be applied in a depression, recess or groove, where it is hardly visible and protected against damage. Moreover, such an NFC tag can be applied much easier as compared to an NFC tag embedded in an object, e.g. by a change of the design of the object.

Preferably, the microbots are identical to one another. Such a design of the microbots makes a control of the formation of the antenna particularly easy.

Preferably, the coupling mechanism includes one of the following:
- a mechanical coupling, such as a ball-joint connection or hook and loop connection,
- a magnetic coupling,
- an electrostatic coupling,
- a solder or welding connection
- a chemical adhesion.

When the microbots are able to self-assemble into an antenna using one of the coupling mechanisms specified in the above list, this means that the microbots are configured to link to each other as well as to the NFC chip using such specific coupling mechanism.

Preferably, each microbot comprises at least two coupling components. In principle, a plurality of coupling components may be arranged at the surface of a microbot for implementing a coupling mechanism by which the microbots link to each other. The more coupling components the higher the probability that two corresponding coupling components find each other in order to establish a link. However, in particular when aiming at a line-shaped antenna, it is advantageous to have just two coupling components at each microbot in order to avoid a clustering of the microbots.

Optionally, the microbots could in addition comprise one or more propulsion apparati allowing for a movement of a microbot in the coating fluid and/or a change of its orientation in space. Such propulsion apparati could either be powered by external power provided to the applied tagging fluid or by power generated by the microbots themselves. Further optionally, the microbots could also comprise an IC chip containing a program for controlling the propulsion apparati.

Further preferably, by the position of the at least two coupling components at the microbots, a shape of the antenna to be formed is predetermined.

This means that due to the positions of the coupling components at the microbots, the microbots are able to connect to each other only when having specific positions and orientations with respect to one another, meaning the positions of the coupling components at the microbots define the shape of the antenna. Here, the term "position of a coupling component" also refers to the direction into which a coupling component protrudes from the surface of the microbot. For example, if the shape of the antenna shall be linear, the coupling components should preferably be positioned at opposite faces of the microbot and should protrude in opposite directions.

Preferably, the coating fluid is any type of paint, surface coating or lacquer. In particular, it is possible to use as coating fluid the same coating fluid that is/was used for providing a particular color to the object or that is/was applied for protecting the surface of the object. In principle, instead of using the same coating fluid, it is also possible to use a coating fluid having the same color or a similar color. This will reduce visibility of the applied NFC tag.

According to the invention, an inventive tagging fluid is used for tagging an object. The inventive tagging fluid offers a high versatility with regard to the size, shape and position of a tag when being used for tagging an object. Accordingly, it is well suited e.g. for adding value to an object in any way, i.e. the tag proving authenticity or carrying detailed information pertaining to the object. In particular, the tag could even be designed to link to a database, blockchain, NFT or digital twin.

An inventive method of providing an object to be tagged with an NFC tag, comprises the following steps:
- applying an amount of the inventive tagging fluid on any part of a surface of the object,
- effecting a coupling of the microbots to one another and to the NFC chip such that they assemble to form the antenna,
- hardening the coating fluid after the antenna has been assembled.

Particularly in a case in which the coating fluid consists of a binding agent and a solvent, a hardening of the coating fluid may e.g. be effected by a drying process, in which the solvent evaporates. Alternatively, the solvent may be removed by a chemical reaction. Hardening means that the viscosity of the coating fluid is so high that a movement of the microbots and of the NFC chip in the fluid is not possible. Preferably, after it has hardened, the coating fluid, which should encapsulate the microbots and the NFC chip, is able to protect the microbots and the NFC chip at least against damage that might occur when the object is handled in a designated way.

Preferably, the NFC chip is programmed to contain the desired information after the tagging fluid has been applied, in particular after the tagging fluid has hardened. In particular, the NFC chip may be programmed by conventional NFC writers.

Further preferably, the NFC chip is storing detailed information pertaining to the object, which information is able to prove authenticity of the object, and wherein preferably the NFC chip is programmed to link to a database which contains a blockchain, NFT or digital twin uniquely identifying the tagged object. If all the information is already stored in the NFC chip, of course it will be not necessary to connect to a database for acquiring said information.

Preferably, a coupling of the microbots to one another and to the NFC chip is effected by providing one or more signals and/or external power by the use of an external control unit. The external control unit may communicate with the microbots and with the NFC chip using electromagnetic waves or fields. In particular, it is possible that the signals are not sent or applied to the microbots and to the NFC chip by the external control unit itself, but by a dedicated unit that is controlled by the control unit. Furthermore, the external control unit may in particular simultaneously be used for programming the NFC chip to contain the desired information.

Further preferably, the external control unit provides one of the following:
- an electromagnetic field
- a mechanical vibration, in particular ultrasonic vibration,
- electromagnetic radiation
- a particle beam
- a chemical substance.

Here, the electromagnetic field may for example be a magnetic field or an electrostatic field. The electromagnetic radiation may e.g. be provided using a laser, a lamp or radiation panel. The frequency of the electromagnetic radiation may lie in the visible range, but this is not mandatory. However, a frequency outside of the radiofrequency range (e.g. in the UV range) is preferred. The particle beam could e.g. be an electron beam or ion beam. The chemical substance could e.g. be a catalyst enabling a chemical reaction at the corresponding coupling components of two microbots.

An inventive NFC tag consists of:
- an NFC chip, being programmable to carry a piece of information, being able to store said piece of information and being able to relay said piece of information when receiving an electromagnetic signal,
- a plurality of microbots, assembled into a functional NFC antenna by a coupling mechanism that is able to link the microbots as well as the NFC chip to one another,
- an amount of coating encapsulating the NFC chip and the plurality of microbots, the amount of coating being any type of paint, surface coating or lacquer that has hardened.

The coating should be able to protect the microbots and the NFC chip against damage that can occur when the object is handled in a designated way, e.g. by providing the necessary mechanical rigidity. Further, the coating may electrically insulate the microbots and the NFC chip. In particular, the coating may have been hardened in a drying process, in which a solvent contained in the coating fluid was able to evaporate. The solvent, which provided for a sufficiently low viscosity of the coating fluid, can, however, also have been removed by a chemical reaction.

The inventive tag may in particular be used in all different fields of application and in all particular ways that are described above in the introductory part of the description.

Preferably, the NFC chip stores detailed information pertaining to the object, which information is able to prove authenticity of the object.

Further preferably, the NFC chip is configured to link to a database which contains a blockchain, NFT or digital twin uniquely identifying the tagged object for obtaining said information.

### Brief Description of Drawings

The subject matter of the invention will be explained in more detail in the following making reference to the attached drawings, of which:
- Fig. 1: shows a schematic of an NFC tag,
- Fig. 2: schematically shows an embodiment of an inventive NFC tag, which has been applied to an object to be tagged,
- Fig. 3: schematically shows details of an exemplary inventive NFC chip,
- Figs. 4a to 4c: schematically show examples for a setup of a microbot,
- Figs. 5a and 5b: show two examples of the final result of a self-assembly process which differ from each other by the shape of the antenna formed in the process,
- Fig. 6: shows an example of an applicator that can be used for applying the tagging fluid on an object to be tagged,
- Figs. 7a to 7c: schematically show examples how signals and power can be supplied to the applied tagging fluid for initiating and completing a self-assembly process, and
- Figs. 8a to 8c: schematically show examples of coupling mechanisms by which coupling components can link to each other.

### Modes for Carrying out the Invention

Fig. 2 schematically shows an inventive NFC tag that has been applied to an object to be tagged and is ready to communicate the information stored in it to a listener device. As can be seen in Fig. 2, the NFC tag consists of an IC chip (NFC chip) 4 and an antenna 3, the latter drawn as a square spiral by way of example, which are both encapsulated by a protective coating 5. Out of reasons of convenience, an optional matching circuit 2 is not explicitly shown.

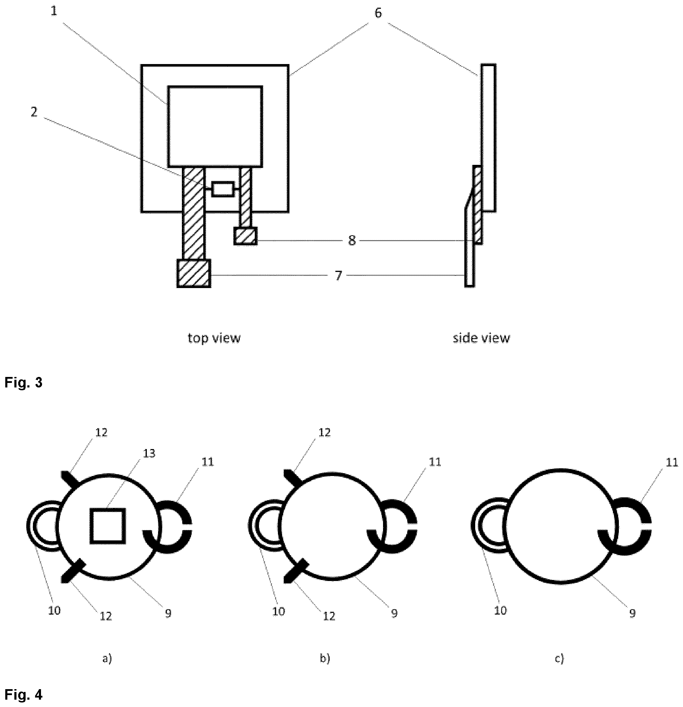

For example, as shown in Fig. 3, the IC chip 4 (also termed "NFC chip") includes an insulating substrate 6 with a logic integrated circuit 1 on it, two connectors for connecting the antenna 7, 8 to the logic integrated circuit 1 and a matching circuit 2 between the two connectors.

In the following, further details will be explained by describing at first a method of applying the NFC tag to an object.

At first, a tagging fluid is prepared by suspending at least one IC chip 4 and a plurality of microbots 9 in a coating fluid 5, e.g. a paint or lacquer that can be used for coating a surface of the object to be tagged. Then, an amount of the tagging fluid is applied at the favored position on the surface of the object. There is no upper limit for the amount to be applied. However, the applied amount of the tagging fluid should at least contain one IC chip 4 and a plurality of microbots 9.

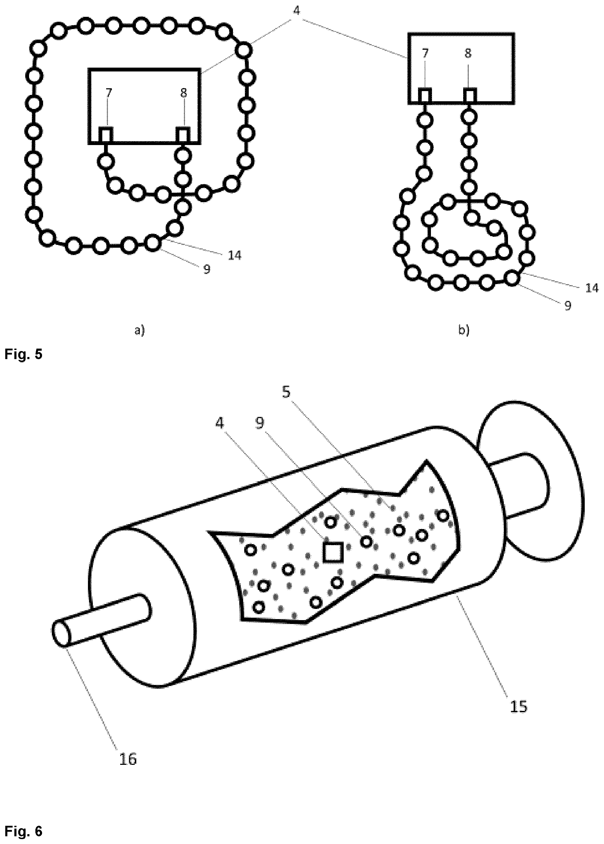

After the tagging fluid has been applied, a self-assembly of the microbots 9 and of the IC chip 4, which are able to move freely in the applied coating fluid 5, is initiated in order to form an antenna 3 from the microbots 9 and connect the same to the IC chip 4 via the connectors 7, 8. Figs. 5a and 5b show two examples of the final result of such assembly process which differ from each other by the shape that the antenna adopts. As can be seen, in each of the two cases, the microbots 9 have coupled to each other in a line shape in order to form the antenna 3, wherein examples for possible coupling types will be described further below. For the function of an antenna, it is necessary that the connections between the microbots 9 themselves and between the microbots 9 and the IC chip 4 have electrical conductivity.

The self-assembly is preferably initiated using an external control unit. In case the microbots 9 and the IC chip 4 were able to couple to each other without such initiation, this could lead to problems as there could be a self-assembly in the tagging fluid before it has bee applied on the object to be tagged. However, it is conceivable that the self-assembly process is so slow that after the tagging fluid has been prepared, there is sufficient time for applying the same on objects to be tagged before the self-assembly process is complete.

After the antenna 3 has been formed in the applied tagging fluid and is linked to the NFC chip 4, the coating fluid 5 is dried or hardened. For this to be possible, the coating fluid 5 may consist of a binding agent and a solvent. The solvent, which provides for a viscosity of the solution that allows for a movement of the microbots 9 and the IC chip 4 during self-assembly, can be removed in such case by means of evaporation or by means of a chemical reaction. Here an evaporation or chemical reaction of the solvent, by which it is removed from the solution, can e.g. be stimulated by providing heat from an external source under the control of an external control unit. Alternatively or in addition, one might also apply UV light or light from other light sources provoking e.g. a cross-linking reaction. Furthermore, a hardening of the coating fluid 5 could also be effected by applying a further chemical component. For example, the tagging fluid that has been applied on the object 17, in which the microbots have self-assembled to form the antenna, could be immersed into a further chemical component, so that the coating fluid 5 hardens by chemically reacting with the further chemical component. Sometimes, a hardening can also be achieved by exposing the applied tagging fluid to the surrounding atmosphere, leading e.g. to an oxidation process.

After the drying or hardening is complete, the tagging process is complete and the NFC tag, in case the information has already been stored inside of it, is ready to use. Otherwise, at first the information may be stored on the NFC tag, e.g. by the external programming unit that was used to control the self-assembly or by conventional NFC writers. Of course, information may also be encoded on the IC chip 4 during self-assembly.

An amount of the tagging fluid can be deposited at a desired location on the surface of an object e.g. by means of an applicator, like the one schematically shown in Fig. 6. In Fig. 6, the applicator 15 is very similar to a known syringe, except that there is no needle or needle hub, but a nozzle 16 through which the tagging fluid is pressed out of the applicator 15, when pressure is exerted on the plunger or piston. In particular, the applicator 15 has a barrel that is dimensioned such that it is able to accommodate such an amount of the tagging fluid that at least one NFC chip 4 and a plurality of microbots 9 are contained in the tagging fluid inside the barrel.

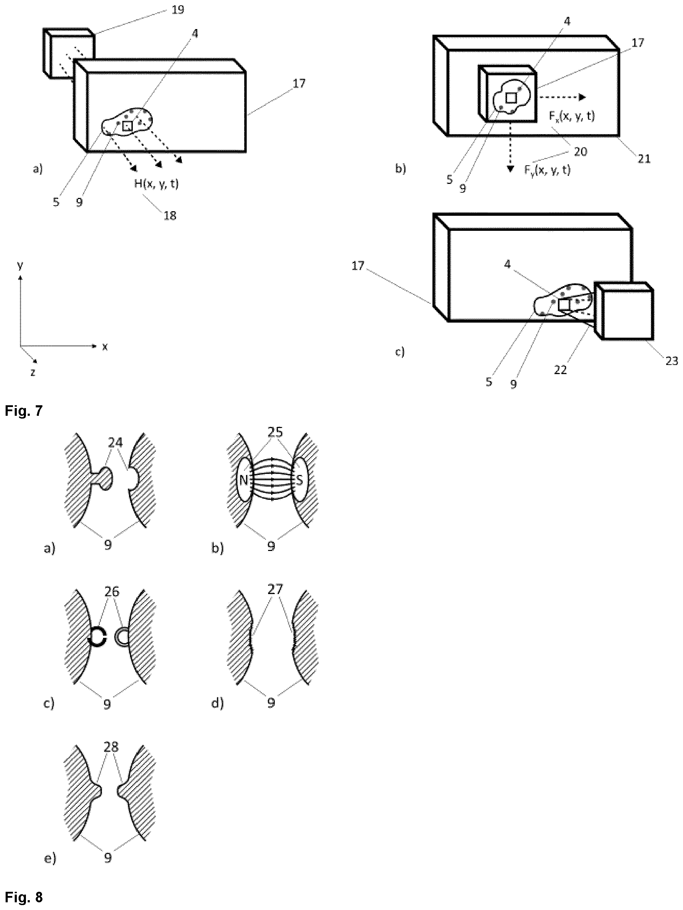

For a self-assembly, it is necessary that the microbots 9 connect to each other and/or the microbots 9 and the IC chip 4 connect to each other. Figs. 8a to 8e show different types of coupling that can be used for the respective connections. Basically, all microbots 9 and/or the IC chip 4 might have the same coupling components or at least coupling components belonging to the same type. However, it is e.g. also conceivable that for the coupling to the IC chip 4 (the coupling to the antenna connectors 7, 8) a different type of coupling is used than for the coupling of the microbots to each other. Furthermore, it will be understood that the examples shown in Figs. 8a to 8e are not meant to be limiting with regard to possible coupling types as long as a coupling type is able to provide a coupling having sufficient electrical conductivity for an antenna to operate. Also, even if in the following reference is sometimes made only to microbots, it is clear that the description is applicable in the same way to coupling components by which a microbot 9 is coupled to an IC chip 4 (or to an antenna connector 7, 8).

Fig. 8a shows a ball-joint coupling 24 for bonding two microbots 9 to each other or to an IC chip 4. Such a coupling can be implemented by providing each microbot 9 with a ball-shaped coupling element and with a socket-shaped coupling element, wherein both elements are shaped such that the socket-shaped coupling element of one microbot 9 can accommodate the ball-shaped coupling element of another microbot 9. In particular, the ball-shaped coupling element is retained such that it can only be decoupled from the socket-shaped coupling element by overcoming a retaining force. In other words, the coupling is implemented in a form-locking way. For example, the coupling can be implemented by way of a snap connection with a clip providing the form-locking connection.

Fig. 8b illustrates a magnetic coupling 25, which can be implemented by providing each microbot 9 with a magnet, which can be of a permanent type or else an electromagnet. A coupling between two microbots 9 or a coupling to an IC chip 4 can then be achieved by a coupling of different magnetic poles to each other or by a coupling between a magnetic pole located on one microbot 9 and a ferromagnetic surface region of another microbot 9.

In Fig. 8c, a coupling between two microbots 9 or between a microbot 9 and an IC chip 4 (or more precisely, the connectors 7, 8 for the antenna) is made using a chain coupling 26 consisting of one hook element and one loop element. Though this can be implemented by providing each microbot with one hook element and one loop element, it is of course also possible to have an aggregation of hook elements in one surface region of a microbot 9 and an aggregation of loop elements in another surface region of the microbot 9 providing a Velcro°-like bond.

Fig. 8d shows a chemical bonding 27 or chemical adhesion as a further example for a coupling type. In order to implement such coupling type, each microbot 9 needs to have two different surface regions each of which is susceptible to chemically react with the respective other region when coming into contact with the respective other region at the surface of a different microbot 9. It is possible to implement a coupling type like this in such a way that in order for a chemical reaction to occur it is additionally necessary to supply energy or a further chemical agent. The two different surface regions may have a different chemical constitution, however, it is also conceivable that they have an identical chemical constitution that nevertheless allows for a chemical reaction between different surface regions. An example for a chemical adhesion could be a protein binding.

Fig. 8e gives an example of a solder connection or welding connection 28 in order to implement a coupling between each two microbots 9 and between microbots 9 and an IC chip 4. When such kind of connection is used, it is necessary to provide the energy (usually heat energy) that is needed for soldering or welding. Here, the necessary energy is preferably provided externally, though in principle it could also be provided by the microbots 9 themselves in that at least one of the two microbots to be coupled to each other comprises an appropriate power source. Though it is possible that each microbot 9 has at least two different elements that are to be brought together for a solder connection or welding connection, it is also conceivable that identical elements are combined for a solder connection or welding connection.

For a coupling between the microbots 9 and/or between the microbots 9 and the IC chip 4, it is in principle sufficient for each microbot 9 to have two coupling components that are located at different parts of its surface. Depending on the shape of the antenna to be formed (e.g. linear, spiral-shaped, etc.), the two coupling components may be arranged at the surface of a microbot 9 such that they are at an appropriate angle allowing for a coupling of several microbots that will lead to the desired shape of the antenna. Nevertheless, of course there may also be arranged more than two coupling components at each microbot allowing for an easy formation of an antenna.

Figs. 4a to 4c schematically show examples for a setup of a microbot 9.

In its simplest design (shown in Fig. 4c), a microbot has only two coupling elements 10 and 11, by which it can couple to other microbots 9 or to the IC chip 4. Only by way of example, a loop 10 and a hook 11 are shown as coupling elements. Other coupling elements shown in Fig. 8 above are possible. With such a simple setup, a microbot 9 may passively move or rotate, meaning it will depend on external forces acting on it for finding an appropriate position and orientation to couple to another microbot 9.

Fig. 4b exemplarily shows a microbot 9 having in addition propulsion apparati 12. Such propulsion apparati 12 might e.g. be rotating flagella driven by a molecular motor as it is known in the art (e.g. a chemically driven motor).

Fig. 4a shows another example of the setup of a microbot 9, which differs from the setup in Fig. 4b in that the microbot 9 additionally comprises an IC chip (13) containing a program for controlling the propulsion apparati 12 and/or for communication with an external programming device or control device. Thus, commands for a specific movement of the microbots 9 may control the self-assembly process.

When a microbot 9 has one or more propulsion apparati 12, usually power for operating the propulsion apparati 12 is needed. Such power can be induced from outside by providing an electromagnetic field, ultrasound or light. Alternatively, a microbot 9 could be furnished with a power source, which, however, would make its design more complicated and bulky.

Preferably, an external control unit or programming unit is used for initiating a self-assembly of the microbots 9 and the IC chip 4, e.g. by providing the necessary power for a movement in the coating fluid 5 and/or a guidance (e.g. specific instructions) to arrive at the desired shape of the antenna. Fig. 7 shows examples how this can be done.

In the example of Fig. 7a, the control unit 19 applies an electromagnetic field 18, which may e.g. be a magnetic field H(x, y, z) or an electrostatic field, at the region where the tagging fluid has been applied on the object 17. The control unit 19 is specifically adapted to generate such a field or to control a corresponding field generator, which is separate from the control unit 19. For the approach of Fig. 7a, the individual microbots (and the IC chip 4, respectively) will have to be able to sense the field that has been applied, e.g. by comprising a corresponding field sensor. In particular, such filed sensor could be a magnet included in each microbot 9, so that the orientations of the individual microbots would automatically adapt to the local field at their respective locations. As a result of this, the microbots could chain up to form the antenna 3, wherein the microbots are linked to each other by magnetic coupling. Likewise, the IC chip 4 could be provided with a magnet, so that the IC chip 4 becomes appropriately oriented in the field for enabling a coupling of microbots 9 to the connectors 7, 8 for the antenna. In order to assist the formation of the antenna (the self-assembly), an applied magnetic field H(x, y, z) could vary in space leading to a force acting on the individual mircrobots.

It shall be mentioned that in the example of Fig. 7a, though the formation of the antenna is initiated by the application of an electromagnetic field, the coupling mechanism linking the individual microbots to each other (and to the connectors 7, 8 for the antenna) need not necessarily be a magnetic coupling or an electrostatic coupling. It would be sufficient to use the applied electromagnetic field for orienting the microbots 9 in space such that they have the intended respective orientations, wherein the linking would then occur e.g. by means of a mechanical coupling such as a ball-joint coupling (shown in Fig. 8a) or a hook-and-loop coupling (also called hook-and-chain coupling or Velcro°-like coupling) (an example thereof is shown in Fig. 8c).

In the example of Fig. 7a, the applied electromagnetic field H(x, y, z) on the one hand provides the power that makes the microbots (and the IC chip 4, respectively) move. On the other hand, the field lines can provide the necessary information for self-assembly, in that a direction for self-assembly is provided and the microbots (and the IC chip 4, respectively) are appropriately oriented in space.

In order to provide the power for initiating the microbots 9 and the IC chip 4, respectively, to move, it is also possible to adopt the approach of Fig. 7b, which shows an external control unit 21 that applies mechanical vibration to the object 17 that is being tagged, the vibration being generated e.g. by an ultrasonic transducer either located in the external control unit 21 or else located outside of to the external control unit 21, but controlled by the external control unit 21.

As the microbots 9 and the IC chip 4 are suspended in the coating fluid 5 applied to the surface of the object 17, they will sense the vibration (the ultrasonic force F(x, y, t)) and will start to move. This will change the respective orientations of the microbots 9 and of the IC chip 4, which will lead to a an orientation of corresponding coupling portions of two elements (e.g. south pole and north pole, hook and loop, ball and socket) such that they lie next to each other. As a result, a coupling of the two coupling elements will become possible.

Fig. 7c shows another possibility for providing an external stimulus that prompts the microbots 9 to connect to each other. In the example of Fig. 7c, the external stimulus is a radiation beam 22 such as a light beam, in particular a laser beam, or a particle beam, which is directed to the tagging fluid applied on the object surface. The radiation beam 22 can be emitted by the control unit 23 itself or a hand-held device connected thereto. Alternatively, the radiation beam 22 can be emitted by a radiation source that is controlled by the control unit 23.

For the microbots 9 and the IC chip 4 to be able to sense the radiation, a coating fluid 5 should be used that is transparent for the radiation used as external stimulus, at least when the coating fluid 5 has been applied in a thin layer. Furthermore, each of the microbots 9 and the IC chip 4 needs to have one or more sensors that are sensitive for the radiation used as external stimulus. For example, the radiation power received by a sensor can be used by a microbot 9 or by the IC chip 4 for changing its orientation in space and for moving in the coating fluid 5. For example, the microbots 9 and the IC chip 4 may comprise one or more propulsion apparati 12 that are powered by the radiation energy. Resulting from the rotation and movement induced by the rotation, the microbots 9 and the IC chip 4 may then couple to each other with their respective coupling components (examples of which are shown in Figs. 8a to 8e). It shall be mentioned that the radiation need not necessarily be electromagnetic radiation. Rather, it is also possible to apply a particle beam such as an electron, ion or antimatter beam.

The possibilities for providing the power and instructions for self-assembly are not limited to the above-mentioned examples.

For example, chemical reactions between the coupling components of the microbots 9 and the IC chip 4 might be induced by adding further substances to the tagging fluid after it has been applied. This is particularly possible, when the coupling is realized by means of a chemical bond, as it is shown in Fig. 8d. However, also other types of coupling might be initiated by chemical reactions, e.g. in that each of the microbots 9 and the IC chip 4 comprises a chemical sensor that can provoke a movement and/or rotation of the respective microbot 9 or IC chip 4 after it has sensed the presence of a particular chemical substance.

Also, it is possible to initiate a self-assembly of the microbots 9 and the IC chip 4 by exerting mechanical pressure on the applied tagging fluid e.g. by means of a stamp.

Finally, it shall be mentioned that different ways of prompting the microbots 9 and the IC chip 4 to couple to each other may be combined as well. For example, the coupling components might becomes active only after a radiation beam has been directed on the applied tagging fluid. The movement and/or rotation of the microbots 9 and the IC chip 4 could on the other hand be controlled by a magnetic field that is simultaneously applied. In that case, the microbots 9 and the IC chip 4 need to have a sensor for the radiation and a sensor for the magnetic field (e.g. an in-built magnet).

Also, the required power to self-assemble need not necessarily be applied externally. Rather, it is also possible to integrate a power source in each of the microbots 9 and/or the IC chip 4, which then could provide the necessary power for a movement/rotation. In such case, the external control unit could merely provide the instruction(s) or command(s) for starting a self-assembly.

The described embodiments are meant as examples or visualizations and shall not confine the invention.

## Claims

1. A tagging fluid to be applied to an object (17) for tagging the same, the tagging fluid consisting of
- an NFC chip (4), being programmable to carry a piece of information, being able to store said piece of information and being able to relay said piece of information when receiving an electromagnetic signal,
- a plurality of microbots (9), being able to self-assemble either fully independently or with external power and/or one or more signals provided, into a functional NFC antenna (3), using a coupling mechanism (14), able to link the microbots (9) as well as the NFC chip (4) to one another, and
- a coating fluid (5), in which the NFC chip (4) and the plurality of microbots (9) are suspended, which is able to harden after having been applied to the object (17) to be tagged and which has a viscosity allowing the NFC chip (4) and the microbots (9) to move freely during self-assembly.

2. The tagging fluid according to claim 1, wherein the microbots (9) are identical to one another.

3. The tagging fluid according to any one of the preceding claims, wherein the coupling mechanism (14) includes one of the following:
- a mechanical coupling, such as a ball-joint connection or hook and loop connection,
- a magnetic coupling,
- an electrostatic coupling,
- a solder or welding connection
- a chemical adhesion.

4. The tagging fluid according to any one of the preceding claims, wherein each microbot (9) comprises at least two coupling components (10, 11).

5. The tagging fluid according to claim 4, wherein by the position of the at least two coupling components (10, 11) at the microbots (9), a shape of the antenna to be formed is predetermined.

6. The tagging fluid according to any one of the preceding claims, wherein the coating fluid (5) is any type of paint, surface coating or lacquer.

7. Use of a tagging fluid according to one of the preceding claims for tagging an object (17).

8. A method of providing an object (17) to be tagged with an NFC tag, comprising the following steps:
- applying an amount of a tagging fluid according to one of claims 1 to 6 on any part of a surface of the object (17),
- effecting a coupling of the microbots to one another and to the NFC chip such that they assemble to form the antenna (3),
- hardening the coating fluid (5) after the antenna (3) has been assembled.

9. The method of claim 8, wherein the NFC chip (4) is programmed to contain the desired information after the tagging fluid has been applied, in particular after the tagging fluid has hardened.

10. The method of claim 9, wherein the NFC chip (4) is storing detailed information pertaining to the object (17), which information is able to prove authenticity of the object (17), and wherein preferably the NFC chip (4) is programmed to link to a database which contains a blockchain, NFT or digital twin uniquely identifying the tagged object (17).

11. The method of one of claims 8 to 10, wherein a coupling of the microbots to one another and to the NFC chip is effected by providing one or more signals and/or external power by the use of an external control unit (19, 21, 23).

12. The method of claim 11, wherein the external control unit (19, 21, 23) provides one of the following:
- an electromagnetic field
- a mechanical vibration, in particular ultrasonic vibration,
- electromagnetic radiation
- a particle beam
- a chemical substance.

13. An NFC tag, consisting of:
- an NFC chip (4), being programmable to carry a piece of information, being able to store said piece of information and being able to relay said piece of information when receiving an electromagnetic signal,
- a plurality of microbots (9), assembled into a functional NFC antenna (3) by a coupling mechanism (14) that is able to link the microbots (9) as well as the NFC chip (4) to one another,
- an amount of coating (5) encapsulating the NFC chip (4) and the plurality of microbots (9), the amount of coating (5) being any type of paint, surface coating or lacquer that has hardened.

14. The NFC tag of claim 13, wherein the NFC chip (4) stores detailed information pertaining to the object (17), which information is able to prove authenticity of the object (17).

15. The NFC tag of claim 14, wherein the NFC chip (4) is configured to link to a database which contains a blockchain, NFT or digital twin uniquely identifying the tagged object (17) for obtaining said information.

## Amended claims

### Amended claims in accordance with Rule 137(2) EPC.

1. A tagging fluid to be applied to an object (17) for tagging the same, the tagging fluid consisting of
- an NFC chip (4), being programmable to carry a piece of information, being able to store said piece of information and being able to relay said piece of information when receiving an electromagnetic signal,
- a plurality of microbots (9), being able to self-assemble either fully independently or with external power and/or one or more signals provided, into a functional NFC antenna (3), using a coupling mechanism (14), able to link the microbots (9) as well as the NFC chip (4) to one another, and
- a coating fluid (5), in which the NFC chip (4) and the plurality of microbots (9) are suspended, which is able to harden after having been applied to the object (17) to be tagged and which has a viscosity allowing the NFC chip (4) and the microbots (9) to move freely during self-assembly.

2. The tagging fluid according to claim 1, wherein the microbots (9) are identical to one another.

3. The tagging fluid according to any one of the preceding claims, wherein the coupling mechanism (14) includes one of the following:
- a mechanical coupling, such as a ball-joint connection or hook and loop connection,
- a magnetic coupling,
- an electrostatic coupling,
- a solder or welding connection
- a chemical adhesion.

4. The tagging fluid according to any one of the preceding claims, wherein each microbot (9) comprises at least two coupling components (10, 11).

5. The tagging fluid according to claim 4, wherein by the position of the at least two coupling components (10, 11) at the microbots (9), a shape of the antenna to be formed is predetermined.

6. The tagging fluid according to any one of the preceding claims, wherein the coating fluid (5) is any type of paint, surface coating or lacquer.

7. Use of a tagging fluid according to one of the preceding claims for tagging the object (17).

8. A method of providing an object (17) to be tagged with an NFC tag, comprising the following steps:
- applying an amount of a tagging fluid according to one of claims 1 to 6 on any part of a surface of the object (17),
- effecting a coupling of the microbots to one another and to the NFC chip such that they assemble to form the antenna (3),
- hardening the coating fluid (5) after the antenna (3) has been assembled.

9. The method of claim 8, wherein the NFC chip (4) is programmed to contain the desired information after the tagging fluid has been applied, in particular after the tagging fluid has hardened.

10. The method of claim 9, wherein the NFC chip (4) is storing detailed information pertaining to the object (17), which information is able to prove authenticity of the object (17), and wherein preferably the NFC chip (4) is programmed to link to a database which contains a blockchain, NFT or digital twin uniquely identifying the tagged object (17).

11. The method of one of claims 8 to 10, wherein a coupling of the microbots to one another and to the NFC chip is effected by providing one or more signals and/or external power by the use of an external control unit (19, 21, 23).

12. The method of claim 11, wherein the external control unit (19, 21, 23) provides one of the following:
- an electromagnetic field
- a mechanical vibration, in particular ultrasonic vibration,
- electromagnetic radiation
- a particle beam
- a chemical substance.

13. An NFC tag, consisting of:
- an NFC chip (4), being programmable to carry a piece of information, being able to store said piece of information and being able to relay said piece of information when receiving an electromagnetic signal,
- a plurality of microbots (9), assembled into a functional NFC antenna (3) by a coupling mechanism (14) that is able to link the microbots (9) as well as the NFC chip (4) to one another,
- an amount of coating (5) encapsulating the NFC chip (4) and the plurality of microbots (9), the amount of coating (5) being any type of paint, surface coating or lacquer that has hardened.

14. The NFC tag of claim 13, wherein the NFC chip (4) stores detailed information pertaining to an object (17) to be tagged, which information is able to prove authenticity of the object (17).

15. The NFC tag of claim 14, wherein the NFC chip (4) is configured to link to a database which contains a blockchain, NFT or digital twin uniquely identifying the object (17) to be tagged for obtaining said information.
